# EUROPÄISCHE PATENTANMELDUNG

(11) **EP 4 600 107 A1**
(43) Veröffentlichungstag der Anmeldung: **13.08.2025**
(21) Anmeldenummer: 25154372.4
(22) Anmeldetag: 28.01.2025
(51) Int. Cl.: B61C 3/02, B61C 17/06, B60L 58/24

(54) **TEMPERIERSYSTEM**

(30) Priorität: 07.02.2024 DE 102024201080
(71) Anmelder: Siemens Mobility GmbH, 81739 München (DE)
(72) Erfinder: Kasap, Irfan, 44653 Herne (DE); Schmitz, Markus, 52379 Langerwehe (DE)
(74) Vertreter: Siemens Patent Attorneys

(57) **Zusammenfassung**

Temperiersystem 100, insbesondere für ein spurgeführtes Fahrzeug 1, mit einem Kältekreis 10 umfassend eine erste Kühlkreislaufleitung 110 und eine zweite Kühlkreislaufleitung 120, welche zum Transport eines Kühlfluids F ausgebildet sind, einen mit der ersten Kühlkreislaufleitung 110.1, 110.2 verbundenen ersten Wärmeübertrager 210, einen mit der zweiten Kühlkreislaufleitung 120.1, 120.2 verbundenen zweiten Wärmeübertrager 220, eine zur Temperierung des Kühlfluids M ausgebildete Temperiereinheit 230, wobei die erste Kühlkreislaufleitung 110.1, 110.2 und die zweite Kühlkreislaufleitung 120.1, 120.2 fluidisch mit der zur Temperierung des Kühlfluids F ausgebildeten Temperiereinheit 230 verbunden sind.

## Beschreibung

Die Erfindung betrifft ein Temperiersystem, insbesondere für ein spurgeführtes Fahrzeug, mit einem Kältekreis umfassend eine erste Kühlkreislaufleitung und eine zweite Kühlkreislaufleitung, welche zum Transport eines Kühlfluids ausgebildet sind, einen mit der ersten Kühlkreislaufleitung verbundenen ersten Wärmeübertrager, einen mit der zweiten Kühlkreislaufleitung verbundenen zweiten Wärmeübertrager, eine zur Temperierung des Kühlfluids ausgebildete Temperiereinheit.

Ferner betrifft die Erfindung ein spurgeführtes Fahrzeug des Personentransports, umfassend zumindest ein solches oder wie nachfolgend beschrieben weitergebildetes Temperiersystem.

Ferner betrifft die Erfindung einen digitalen Zwilling eines solchen oder wie nachfolgend beschrieben weitergebildeten Temperiersystem oder eines solchen oder wie nachfolgend beschrieben weitergebildeten spurgeführten Fahrzeugs.

Bei oberleitungsfrei betreibbaren spurgeführten Fahrzeugen ist zur Kühlung der Energiespeicher wie bspw. Traktionsbatterie ein sogenannter Chiller notwendig. Beim Lade- und Entladevorgang der Batterien entsteht Wärme, welche aus den Batterien abgeführt werden muss, um eine Überhitzung zu verhindern. Zur Entwärmung der Batterien kühlt der Chiller ein Fluid herunter welches dann durch die Batterien strömt und diese kühlt. Ebenso gibt es Situationen, in denen Batterien gekühlt werden müssen.

Der Chiller stellt dabei eine definierte Kälteleistung zur Verfügung. Ebenfalls kann der Chiller mittels einer integrierten Pumpe im Kältekreis einen definierten Kühlfluidvolumenstrom zur Verfügung stellen.

Der limitierende Faktor des Chillers ist in der Regel der zu fördernde Volumenstrom an Kühlfluid. Jeder Batteriecontainer benötigt beispielswiese einen Volumenstrom von 80m³/h bis 120m³/h. Der Chiller kann aber nur einmalig 80m³/h bis 120m³/h bereitstellen. Demnach wäre für den zweiten Batteriecontainer ein zweiter teurer Chiller notwendig, obwohl die Kälteleistung für beide genügen würde.

Bisher musste zur Lösung ein zweiter vollständiger und kostspieliger Chiller installiert werden mit dem der zusätzliche Batteriecontainer gekühlt werden kann.

Ausgehend davon, liegt der Erfindung die Aufgabe zugrunde, ein leistungsfähigeres Temperiersystem bereitzustellen.

Diese Aufgabe wird durch das Temperiersystem des Anspruchs 1 gelöst. Ferner wird die Aufgabe durch das spurgeführte Fahrzeug des Anspruchs 9 gelöst. Weiterhin wird die Aufgabe durch den digitalen Zwilling des Anspruchs 13 gelöst.

Vorteilhafte Ausgestaltungen und Weiterbildungen sind Gegenstand der jeweiligen Unteransprüche.

Erfindungsgemäß wird ein Temperiersystem, insbesondere für ein spurgeführtes Fahrzeug, bereitgestellt. Das Temperiersystem weist einen Kältekreis auf, umfassend eine erste Kühlkreislaufleitung und eine zweite Kühlkreislaufleitung, welche zum Transport eines Kühlfluids ausgebildet sind. Der Kältekreis umfasst ferner einen mit der ersten Kühlkreislaufleitung verbundenen ersten Wärmeübertrager, einen mit der zweiten Kühlkreislaufleitung verbundenen zweiten Wärmeübertrager, eine zur Temperierung des Kühlfluids ausgebildete Temperiereinheit. Die erste Kühlkreislaufleitung und die zweite Kühlkreislaufleitung sind fluidisch mit der zur Temperierung des Kühlfluids ausgebildeten Temperiereinheit verbunden.

Ferner wird erfindungsgemäß ein spurgeführtes Fahrzeug des Personentransports bereitgestellt, umfassend zumindest ein solches oder wie nachfolgend beschrieben, weitergebildetes Temperiersystem.

Erfindungsgemäß wird ferner ein digitaler Zwilling eines solchen oder wie nachfolgend beschrieben weitergebildeten Temperiersystem oder eines solchen oder wie nachfolgend beschrieben weitergebildeten spurgeführten Fahrzeugs bereitgestellt, wobei der digitale Zwilling ein digitalisiertes Abbild des eines Temperiersystem oder des spurgeführten Fahrzeugs umfasst.

Erfindungsgemäß sind somit die erste Kühlkreislaufleitung und die zweite Kühlkreislaufleitung und respektive der erste Wärmeübertrager, und der zweite Wärmeübertrager Teil eines gemeinsamen Kühlkreislauf, welcher von einem einzelnen Kühlfluid durchströmt wird. Weiterhin ist der Kältekreis derart ausgebildet, dass das Kühlfluid in Temperiereinheit temperierbar ist.

Die Temperiereinheit ist dabei derart ausgebildet, dass das Kühlfluid sowohl gekühlt als auch erwärmt werden kann.

Die Temperiereinheit weist vorzugsweise einen Wärmeübertrager auf.

Die vorgeschlagene Erfindung bietet eine deutlich preisgünstigere Alternative zu einem separaten Kältekreislauf. Neben eingesparten Kosten werden ebenfalls Bauraum und Gewicht eingespart.

Bei dem spurgeführten Fahrzeug handelt es sich beispielsweise um ein Schienenfahrzeug oder eine Magnetschwebebahn, vorzugsweise zum Personentransport.

Zum Personentransport sind speziell auf den Zweck des Personentransports ausgerichtet und entsprechend zu Transport von, vorzugsweise zahlenden, Fahrgästen ausgerichtet.

In Ausgestaltung des Temperiersystems kann vorgesehen sein, dass der Kältekreis eine Wärmemanagementeinheit aufweist, die fluidisch mit der Tempereiereinheit verbunden, vorzugsweise vorgeschaltet, ist.

Durch Bereitstellung der Wärmemanagementeinheit wird eine Baueinheit bereitgestellt, die es ermöglicht die dem ersten Wärmeübertragungen und dem zweiten Wärmeübertrager bereitgestellten Wärmeleistung und/oder Kälteleistung zu einzustellen (steuern und/oder regeln). Hierzu ist die Wärmemanagementeinheit vorzugsweise derart ausgebildet, dass sowohl der Volumenstrom des Kühlfluids als auch die Temperatur des Kühlfluids einstellbar, vorzugsweise steuerbar oder regelbar, ist.

Die Wärmemanagementeinheit kann auch als "thermal management unit" (TMU) bezeichnet werden.

In vorteilhafter Weiterbildung des Temperiersystems kann vorgesehen sein, dass der Kältekreis nur eine einzige Temperiereinheit aufweist, die mit dem ersten Wärmeübertrager und dem zweiten Wärmeübertrager fluidisch verbunden ist.

Hierdurch wird eine Lösung bereitgestellt, die es erlaubt lediglich eine Temperiereinheit auszubilden und auf diese Weise Mehrkosten und zusätzlichen apparativen Aufwand zu vermeiden.

In Ausgestaltung des Temperiersystems kann vorgesehen sein, dass die Wärmemanagementeinheit einen dritten Wärmeübertrager aufweist.

Vorzugsweise ist der Wärmeübertrager derart ausgebildet, dass Wärme von der ersten Wärmeübertrager und der ersten Kühlkreislaufleitung auf den zweiten Wärmeübertrager und die zweite Kühlkreislaufleitung übertragbar ist.

Hierdurch ist es möglich, dass bereits im Temperiersystem vorhandene Wärme oder Kälte nutzbar ist, wodurch der Gesamtwirkungsgrad gesteigert werden kann und es möglich ist das Temperiersystems mit einen gemeinsamen Kältekreis zu realisieren.

In vorteilhafter Weiterbildung des Temperiersystems kann vorgesehen sein, dass die Wärmemanagementeinheit eine Fluidpumpe aufweist.

Hierdurch wird erreicht, dass der Volumenstrom des Kühlfluid einstellbar ist.

Das Vorsehen der Fluidpumpe in der Wärmemanagementeinheit erlaubt es, diese baulich an einem zentralen Ort des Temperiersystems vorzusehen.

In Ausgestaltung des Temperiersystems kann vorgesehen sein, dass die Wärmemanagementeinheit ein Bypassventil aufweist, das dem dritten Wärmeübertrager vorgeschaltet oder nachgeschaltet ist.

Hierdurch wird erreicht, dass der Volumenstrom des Kühlfluids zwischen dem ersten Wärmeübertrager, dem zweiten Wärmeübertrager, dem dritten Wärmeübertrager und/oder der Temperiereinheit einstellbar ist.

In vorteilhafter Weiterbildung des Temperiersystems kann vorgesehen sein, dass der erste Wärmeübertrager und der zweite Wärmeübertrager Batteriewärmeübertrager sind.

Der erste Wärmeübertrager und der zweite Wärmeübertrager sind demnach dazu ausgebildet Wärme in/aus einer Batterie zu übertragen.

In Ausgestaltung des Temperiersystems kann vorgesehen sein, dass die Temperiereinheit ein Chiller ist.

In Ausgestaltung kann das spurgeführte Fahrzeug ein oberleitungsfrei betreibbares Fahrzeug sein. Ein solches oberleitungsfrei betreibbares Fahrzeug kann über eine längere Strecke oberleitungsfrei im Normalbetrieb fahren und ist zu unterscheiden von Fahrzeugen, die einen oberleitungsfreien Notbetrieb erlauben für eine kurze Strecke.

In vorteilhafter Weiterbildung des spurgeführten Fahrzeugs kann vorgesehen sein, dass das spurgeführt Fahrzeug zumindest einen ersten Energiespeicher, vorzugsweise eine erste Traktionsbatterie, welcher dem erste Wärmeübertrager zugeordnet ist und zumindest einen zweiten Energiespeicher, vorzugsweise eine zweite Traktionsbatterie, welcher dem zweite Wärmeübertrager zugeordnet ist, umfasst.

Hierdurch wird jedem Energiespeicher ein separater Wärmeübertrager zugeordnet, der ein separates Temperaturmanagement jedes Energiespeicher erlaubt.

Ferner vorzugsweise handelt es sich bei dem spurgeführten Fahrzeug um ein batterieelektrisches Schienenfahrzeug. Das batterieelektrische Schienenfahrzeug kann insbesondere als BEMU (Battery electric multiple unit)-Schienenfahrzeug ausgebildet sein.

In Ausgestaltung des spurgeführten Fahrzeugs kann vorgesehen sein, dass der erste Energiespeicher, der zweite Energiespeicher, die Temperiereinheit und/oder die Wärmemanagementeinheit auf einem Fahrzeugdach des spurgeführten Fahrzeugs angeordnet ist.

Hierdurch wird vorhandener Bauraum genutzt und es ist möglich die vorstehend genannten Einheiten baulich in einfacher Weise fluidisch miteinander zu verbinden.

Ferner ist es hierdurch möglich, dass das spurgeführte Fahrzeug hinsichtlich seiner Gestaltung in Bezug auf den Unterflurbereich keinen weiteren Restriktionen unterworfen ist, sodass eine niedrige Flurhöhe realisierbar ist.

In vorteilhafter Weiterbildung des spurgeführten Fahrzeugs kann vorgesehen sein, dass der erste Energiespeicher auf einem ersten Wagenkasten angeordnet ist und der zweite Energiespeicher auf einem zweiten Wagenkasten angeordnet ist.

Durch wird erreicht, dass das Gewicht des ersten Energiespeicher und des zweiten Energiespeicher auf zwei unterschiedliche Wagenkästen verteilt wird. Entsprechende zulässige Achslasten werden hierdurch in der Folge nicht überschritten oder unnötig stark erhöht. Bei dahin ist es möglich vorhanden Bauraum optimal auszunutzen.

Sämtliche Ausgestaltungen des Temperiersystems gelten in gleicher Weise für das spurgeführte Fahrzeugs und vice versa.

Sämtliche Ausgestaltungen des Temperiersystems und/oder des spurgeführten Fahrzeugs gelten in gleicher Weise für den digitalen Zwilling und vice versa.

Nachfolgend soll die Erfindung anhand eines Ausführungsbeispiels mit Bezug auf die Zeichnung erläutert werden.

Es zeigt:
- Fig. 1: eine schematische Draufsicht eines erfindungsgemäßen spurgeführten Fahrzeugs 1 mit einem erfindungsgemäßen Temperiersystem; und
- Fig. 2: eine schematische Darstellung eines Teils des Temperiersystems des erfindungsgemäßen spurgeführten Fahrzeugs 1 gemäß Fig. 1.

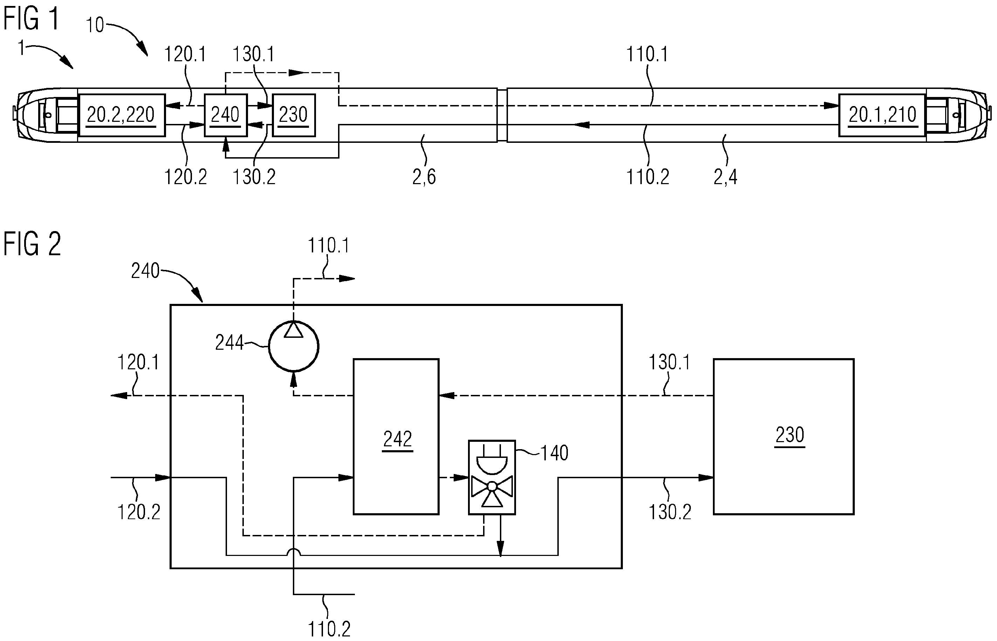

Fig. 1 zeigt eine schematische Draufsicht eines erfindungsgemäßen spurgeführten Fahrzeugs 1 mit einem erfindungsgemäßen Temperiersystem 100.

Bei dem spurgeführten Fahrzeug 1 handelt es sich gemäß dem Ausführungsbeispiel vorzugsweise um ein Fahrzeug des Personentransports, d. h. eine Mehrzahl an, vorzugsweise zahlenden, Fahrgästen können sich im Innenraum des spurgeführten Fahrzeugs 1 aufhalten und dieser ist speziell an die Anforderungen des Personentransports angepasst.

Gemäß dem Ausführungsbeispiel handelt es sich bei dem spurgeführten Fahrzeug um ein batterieelektrisches Schienenfahrzeug. Das batterieelektrische Schienenfahrzeug kann insbesondere als BEMU (Battery electric multiple unit)-Schienenfahrzeug ausgebildet sein.

Das Temperiersystem 100 gemäß dem Ausführungsbeispiel ist für ein spurgeführtes Fahrzeug ausgebildet. Das Temperiersystem 100 weist einen Kältekreis 10 auf, der eine erste Kühlkreislaufleitung 110 und eine zweite Kühlkreislaufleitung 120 umfasst, welche zum Transport eines Kühlfluids F ausgebildet sind.

Der Kältekreis 10 weist einen mit der ersten Kühlkreislaufleitung 110.1, 110.2 verbundenen ersten Wärmeübertrager 210.

Der Kältekreis 10 weist einen mit der zweiten Kühlkreislaufleitung 120.1, 120.2 verbundenen zweiten Wärmeübertrager 220 auf.

Weiterhin weist der Kältekreis 10 eine zur Temperierung des Kühlfluids M ausgebildete Temperiereinheit 230 auf.

Die erste Kühlkreislaufleitung 110.1, 110.2 und die zweite Kühlkreislaufleitung 120.1, 120.2 sind fluidisch mit der zur Temperierung des Kühlfluids M ausgebildeten Temperiereinheit 230 verbunden.

Die erste Kühlkreislaufleitung 110.1, 110.2 weist dabei eine erste Kühlkreislaufvorlaufleitung 110.1 und eine erste Kühlkreislaufrücklauflaufleitung 110.1 auf.

Die zweite Kühlkreislaufleitung 120.1, 120.2 weist dabei eine zweite Kühlkreislaufvorlaufleitung 120.1 und eine zweite Kühlkreislaufrücklauflaufleitung 120.1 auf.

Der Tempereiereinheit 230 ist eine Wärmemanagementeinheit 240 fluidisch vorgeschaltet.

Der Kältekreis 10 weist nur eine einzige Temperiereinheit 230 auf, die mit dem ersten Wärmeübertrager 210 und dem zweiten Wärmeübertrager 220 fluidisch verbunden ist.

Der Kältekreis f 10 weist ferner nur eine einzige Wärmemanagementeinheit 240 auf, die mit dem ersten Wärmeübertrager 210 und dem zweiten Wärmeübertrager 220 fluidisch verbunden ist.

Der Kältekreis 10 weist ferner eine dritte Kühlkreislaufleitung 130.1, 130.2 auf. Die Wärmemanagementeinheit 240 ist über die dritte Kühlkreislaufleitung 130.1, 130.2 mit der Temperiereinheit 230 fluidisch verbunden.

Die dritte Kühlkreislaufleitung 130.1, 130.2 weist dabei eine dritte Kühlkreislaufvorlaufleitung 130.1 und eine dritte Kühlkreislaufrücklauflaufleitung 130.1 auf.

Der erste Energiespeicher 20.1, der zweite Energiespeicher 20.2, die Temperiereinheit 230 und/oder die Wärmemanagementeinheit 240 ist/sind auf einem Fahrzeugdach 2 des spurgeführten Fahrzeugs 1 angeordnet.

Der erste Energiespeicher 20.1 ist auf einem ersten Wagenkasten 4 angeordnet und der zweite Energiespeicher 20.2 ist auf einem zweiten Wagenkasten 6 angeordnet.

Das spurgeführte Fahrzeug 1 weist zumindest einen ersten Energiespeicher 20.1, vorzugsweise eine erste Traktionsbatterie, auf, welcher dem erste Wärmeübertrager 210 zugeordnet ist.

Das spurgeführte Fahrzeug 1 weist ferner zumindest einen zweiten Energiespeicher 20.2, vorzugsweise eine zweite Traktionsbatterie, auf, welcher dem zweite Wärmeübertrager 220 zugeordnet ist, umfasst.

Der erste Wärmeübertrager 210 und der zweite Wärmeübertrager 220 sind in Ausgestaltung Batteriewärmeübertrager.

Die Temperiereinheit 230 ist in Ausgestaltung ein Chiller.

Fig. 2 eine schematische Darstellung eines Teils des Temperiersystems 100 des erfindungsgemäßen spurgeführten Fahrzeugs 1 gemäß Fig. 1.

Wie aus der Fig. 2 ersichtlich, weist die Wärmemanagementeinheit 240 einen dritten Wärmeübertrager 242 auf.

Die Wärmemanagementeinheit 240 weist ferner eine Fluidpumpe 244 auf.

Die Fluidpumpe 244 ist dazu mit der erste Kühlkreislaufleitung 110.1, 110.2, insbesondere der ersten Kühlkreislaufvorlaufleitung, mit dem dritten Wärmeübertrager 242 verbunden.

Die Wärmemanagementeinheit 240 weist ferner ein Bypassventil 246 auf.

Gemäß der Ausführungsform ist das Bypassventil 246 dem dritten Wärmeübertrager 242 nachgeschaltet.

Das Bypassventil 246 ist dazu mit einer vierten Kühlkreislaufleitung 140.1 mit dem dritten Wärmeübertrager 242 verbunden.

Das Bypassventil 246 ist ferner mit der zweiten Kühlkreislaufleitung 120.1, 120.2, insbesondere der zweiten Kühlkreislaufrücklaufleitung 120.2, fluidisch verbunden.

Das Bypassventil 246 ist mit der dritten Kühlkreislaufleitung 130.1, 130.2, insbesondere der dritten Kühlkreislaufvorlaufleitung 130.1, fluidisch verbunden.

Die zweiten Kühlkreislaufrücklaufleitung 120.2 und die dritte Kühlkreislaufvorlaufleitung 130.1 sind miteinander verbunden.

Das Bypassventil 246 ist ferner mit der zweiten Kühlkreislaufleitung 120.1, 120.2, insbesondere der zweiten Kühlkreislaufvorlaufleitung 120.1, fluidisch verbunden.

Schließlich wird ein digitaler Zwilling des Temperiersystem 100 oder des spurgeführten Fahrzeugs 1 bereitgestellt, wobei der digitale Zwilling ein digitalisiertes Abbild des Temperiersystem 100 oder ein digitalisiertes Abbild des spurgeführten Fahrzeugs 1 umfasst.

Die vorstehende Offenbarung gilt gleichermaßen wie für das Temperiersystem 100 auch für ein spurgeführtes Fahrzeug 1, umfassend zumindest ein wie vorstehend beschrieben ausgeführtes Temperiersystem 100. Gleichsam kann sich die vorstehende Offenbarung auch auf einen einzelnen Wagen eines spurgeführten Fahrzeugs 1 beziehen.

Sämtliche Ausgestaltungen des Temperiersystem 100 und/oder des spurgeführten Fahrzeugs 1 gelten in gleicher Weise für den digitalen Zwilling.

Abschließend sei erwähnt, dass die Merkmale aller oben beschriebenen Ausführungsvarianten untereinander in beliebiger Weise kombiniert werden können, um weitere andere Ausführungsbeispiele der Erfindung zu bilden. Auch können alle Merkmale von Unteransprüchen jeweils für sich mit jedem Merkmal jedes anderen der Ansprüche kombiniert werden, und zwar jeweils für sich allein oder in beliebiger Kombination, um weitere andere Ausführungsbeispiele zu erhalten.

Obwohl die Erfindung im Detail durch ein Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Temperiersystem (100), insbesondere für ein spurgeführtes Fahrzeug (1), mit einem Kältekreis (10) umfassend
- eine erste Kühlkreislaufleitung (110.1, 110.2) und eine zweite Kühlkreislaufleitung (120.1, 120.2), welche zum Transport eines Kühlfluids (F) ausgebildet sind,
- einen mit der ersten Kühlkreislaufleitung (110.1, 110.2) verbundenen ersten Wärmeübertrager (210),
- einen mit der zweiten Kühlkreislaufleitung (120.1, 120.2) verbundenen zweiten Wärmeübertrager (220),
- eine zur Temperierung des Kühlfluids (F) ausgebildete Temperiereinheit (230),
**dadurch gekennzeichnet, dass**
die erste Kühlkreislaufleitung (110.1, 110.2) und die zweite Kühlkreislaufleitung (120.1, 120.2) fluidisch mit der zur Temperierung des Kühlfluids (F) ausgebildeten Temperiereinheit (230) verbunden sind.

2. Temperiersystem (100) nach Anspruch 1,
**dadurch gekennzeichnet, dass**
der Kältekreis (10) eine Wärmemanagementeinheit (240) aufweist, die fluidisch mit der Tempereiereinheit (230) verbunden, vorzugsweise vorgeschaltet, ist.

3. Temperiersystem (100) nach Anspruch 1 oder 2,
**dadurch gekennzeichnet, dass**
der Kältekreis (10) nur eine einzige Temperiereinheit (230) aufweist, die mit dem ersten Wärmeübertrager (210) und dem zweiten Wärmeübertrager (220) fluidisch verbunden ist.

4. Temperiersystem (100) nach Anspruch 2 oder 3,
**dadurch gekennzeichnet, dass**
die Wärmemanagementeinheit (240) einen dritten Wärmeübertrager (242) aufweist.

5. Temperiersystem (100) nach einem der Ansprüche 2 bis 4,
**dadurch gekennzeichnet, dass**
die Wärmemanagementeinheit (240) eine Fluidpumpe (244) aufweist.

6. Temperiersystem (100) nach einem der Ansprüche 4 oder 5,
**dadurch gekennzeichnet, dass**
die Wärmemanagementeinheit (240) ein Bypassventil (246) aufweist, das dem dritten Wärmeübertrager (242) vorgeschaltet oder nachgeschaltet ist.

7. Temperiersystem (100) nach einem der Ansprüche 1 bis 6,
**dadurch gekennzeichnet, dass**
der erste Wärmeübertrager (210) und/oder der zweite Wärmeübertrager (220) Batteriewärmeübertrager sind.

8. Temperiersystem (100) nach einem der Ansprüche 1 bis 7,
**dadurch gekennzeichnet, dass**
die Temperiereinheit (230) ein Chiller ist.

9. Spurgeführtes Fahrzeug (1) des Personentransports, umfassend zumindest ein Temperiersystem (100) nach einem der Ansprüche 1 bis 8.

10. Spurgeführtes Fahrzeug (1) nach Anspruch 9,
**dadurch gekennzeichnet, dass**
das spurgeführt Fahrzeug (1) zumindest einen ersten Energiespeicher (20.1), vorzugsweise eine erste Traktionsbatterie, welcher dem ersten Wärmeübertrager (210) zugeordnet ist und zumindest einen zweiten Energiespeicher (20.2), vorzugsweise eine zweite Traktionsbatterie, welcher dem zweiten Wärmeübertrager (220) zugeordnet ist, umfasst.

11. Spurgeführtes Fahrzeug (1) nach Anspruch 9 oder 10,
**dadurch gekennzeichnet, dass**
der erste Energiespeicher (20.1), der zweite Energiespeicher (20.2), die Temperiereinheit (230) und/oder die Wärmemanagementeinheit (240) auf einem Fahrzeugdach (2) des spurgeführten Fahrzeugs (1) angeordnet ist.

12. Spurgeführtes Fahrzeug (1) nach Anspruch 10 oder 11,
**dadurch gekennzeichnet, dass**
der erste Energiespeicher (20.1) auf einem ersten Wagenkasten (4) angeordnet ist und der zweite Energiespeicher (20.2) auf einem zweiten Wagenkasten (6) angeordnet ist.

13. Digitaler Zwilling eines Temperiersystem (100) nach einem der Ansprüche 1 bis 8, eines spurgeführten Fahrzeugs (1) nach einem der Ansprüche 9 bis 12, wobei der digitale Zwilling ein digitalisiertes Abbild des Temperiersystem (100) oder des spurgeführten Fahrzeugs (1) umfasst.
